# EUROPÄISCHE PATENTANMELDUNG

(11) **EP 4 822 294 A2**
(43) Veröffentlichungstag der Anmeldung: **14.10.2026**
(21) Anmeldenummer: 26162185.8
(22) Anmeldetag: 04.03.2026
(51) Int. Cl.: G01C 15/00

(54) **ROTATIONSLASER**

(30) Priorität: 20.03.2025 DE 102025110739
(71) Anmelder: Robert Bosch GmbH, 70442 Stuttgart (DE)
(72) Erfinder: Roehm, Tobias, 72218 Wildberg-Sulz (DE)

(57) **Zusammenfassung**

Bei einem Rotationslaser mit einem Gehäuse, in dem zur Rotation eines Laserstrahls eine Antriebseinheit zum rotierenden Antrieb einer Spindel (125) angeordnet ist, wobei an der Spindel (125) ein Strahlenumleiter (165) zum Umlenken des Laserstrahls angeordnet ist, weist die Spindel (125) eine Halterung (410) auf, die zumindest zwei Aufnahmeelemente (411, 412, 413, 414) aufweist, welche eine Aufnahme (415) ausbilden, in der der Strahlenumleiter (165) aufnehmbar ist, wobei die mindestens zwei Aufnahmeelemente (411, 412, 413, 414) dazu ausgebildet sind, den Strahlenumleiter (165) in der Aufnahme (415) mechanisch zu fixieren.

## Beschreibung

### Stand der Technik

Die vorliegende Erfindung betrifft einen Rotationslaser mit einem Gehäuse, in dem zur Rotation eines Laserstrahls eine Antriebseinheit zum rotierenden Antrieb einer Spindel angeordnet ist, wobei an der Spindel ein Strahlenumleiter zum Umlenken des Laserstrahls angeordnet ist.

Aus dem Stand der Technik ist ein Rotationslaser mit einer derartigen Antriebseinheit zur Rotation eines Laserstrahls bekannt. Die Antriebseinheit ist ein einem Gehäuse des Rotationslasers angeordnet. Hierbei ist an der Antriebseinheit zum rotierenden Antrieb eine Spindel angeordnet, wobei an der Spindel ein Strahlenumleiter zum Umlenken des Laserstrahls angeordnet ist.

### Offenbarung der Erfindung

Die Erfindung betrifft einen Rotationslaser mit einem Gehäuse, in dem zur Rotation eines Laserstrahls eine Antriebseinheit zum rotierenden Antrieb einer Spindel angeordnet ist, wobei an der Spindel ein Strahlenumleiter zum Umlenken des Laserstrahls angeordnet ist. Die Spindel weist eine Halterung auf, die zumindest zwei Aufnahmeelemente aufweist, welche eine Aufnahme ausbilden, in der der Strahlenumleiter aufnehmbar ist, wobei die mindestens zwei Aufnahmeelemente dazu ausgebildet sind, den Strahlenumleiter in der Aufnahme mechanisch zu fixieren.

Die Erfindung ermöglicht somit die Bereitstellung eines Rotationslaser, bei dem durch die mindestens zwei Aufnahmeelemente eine sichere und zuverlässige Anordnung des Strahlenumleiters ermöglicht werden kann.

Vorzugsweise weist die Aufnahme zwei Positionierungsflächen zum Positionieren des Strahlenumleiters auf.

Somit kann eine exakte und präzise Anordnung des Strahlenumleiters in der Aufnahme ermöglicht werden.

Bevorzugt ist der Strahlenumleiter mittels zumindest einer Klebverbindung in der Aufnahme fixiert.

Somit kann eine sichere und zuverlässige Fixierung des Strahlenumleiters in der Aufnahme ermöglicht werden.

Vorzugsweise ist entlang einer Querrichtung der zwei Positionierungsflächen zwischen den zwei Positionierungsflächen eine Klebstoffaufnahme zur Aufnahme von einem ersten Klebstoff angeordnet, wobei der erste Klebstoff eine flächige Klebverbindung ausbildet.

Somit kann die flächige Klebverbindung in einfacher Art und Weise ausgebildet werden.

Bevorzugt ist in zwei Ausnehmungen, die quer zu den zwei Positionierungsflächen und zwischen einem ersten Aufnahmeelement und einem zweiten Aufnahmeelement angeordnet sind, ein zweiter Klebstoff zur Ausbildung einer zweiten Klebverbindung angeordnet.

Somit kann einfach und unkompliziert eine weitere Klebverbindung zur sicheren Anordnung des Strahlenumleiteres bereitgestellt werden.

Gemäß einer Ausführungsform ist die zweite Klebverbindung eine Kehlnaht-Klebverbindung.

Somit kann auf einfache Art und Weise eine geeignete Klebverbindung bereitgestellt werden.

Vorzugsweise ist an zumindest einer Stirnseite der zwei Positionierungsflächen ein Anschlag ausgebildet.

Somit kann eine sichere und zuverlässige Anordnung des Strahlenumleiters in der Aufnahme der Halterung ermöglicht werden.

Die Halterung weist bevorzugt einen Befestigungsabschnitt zur Anordnung an einem freien Ende der Spindel auf.

Somit kann auf einfache Art und Weise eine Anordnung des Strahlenumleiters mittels der Halterung an der Spindel ermöglicht werden.

Vorzugsweise weist der Befestigungsabschnitt eine Innenaufnahme mit einer Abflachung auf, wobei die Spindel an ihrem freien Ende eine korrespondierende Aufnahme mit einer Abflachung aufweist.

Somit kann eine definierte Ausrichtung des Strahlenumleiters an der Spindel ermöglicht werden.

Bevorzugt ist der Halterung eine Kappe mit einer Innenaufnahme zur Aufnahme der Halterung zugeordnet.

Somit kann eine sichere und zuverlässige Anordnung der Kappe an der Halterung ermöglicht werden.

Vorzugsweise weist die Kappe eine Aufnahme zur Aufnahme eines Keilprismas auf.

Somit kann auf einfache Art und Weise eine Anordnung des Keilprismas am Strahlenumleiter ermöglicht werden.

Bevorzugt ist der Halterung ein Käfig zugeordnet.

Somit kann einfach und unkompliziert eine Abdeckung der Halterung bereitgestellt werden.

Vorzugsweise ist ein Abstand zwischen einer Innenfläche des Käfigs zu einer Oberfläche des Strahlenumleiters kleiner als eine Tiefe der Innenaufnahme. Alternativ ist ein Abstand zwischen einer Innenfläche des Käfigs zu einer Oberfläche einer der Halterung zugeordneten Kappe kleiner als eine Tiefe der Innenaufnahme.

Somit kann eine sichere und zuverlässige Anordnung des Strahlenumleiters ermöglicht werden.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
- Fig. 1: eine perspektivische Ansicht eines erfindungsgemäßen Rotationslasers mit einer Antriebseinheit,
- Fig. 2: eine perspektivische Explosionsansicht einer der Antriebseinheit von Fig. 1 zugeordneten Spindel und einer der Spindel zugeordneten Lageranordnung,
- Fig. 3: einen Längsschnitt durch die Lageranordnung der Spindel von Fig. 2 im montierten Zustand,
- Fig. 4: eine schematische Ansicht der Lageranordnung von Fig. 2 und Fig. 3 von einem freien Ende der Spindel aus gesehen,
- Fig. 5: eine perspektivische Ansicht der Antriebseinheit von Fig. 1 mit einer Ermittlungseinheit und einem Strahlenumleiter,
- Fig. 6: einen Längsschnitt durch die Antriebseinheit von Fig. 5,
- Fig. 7: eine perspektivische Ansicht der Spindel von Fig. 2 bis Fig. 6 mit der Ermittlungseinheit von Fig. 5 und Fig. 6,
- Fig. 8: eine Draufsicht auf eine der Antriebseinheit von Fig. 1 bis Fig. 7 zugeordnete Leiterplatte,
- Fig. 9: eine perspektivische Ansicht der Spindel von Fig. 2 bis Fig. 8 mit einer Zahnscheibe und dem Strahlenumleiter von Fig. 1, Fig. 5 und Fig. 6,
- Fig. 10: einen Längsschnitt durch die Lageranordnung der Spindel und der Zahnscheibe von Fig. 9,
- Fig. 11: einen Längsschnitt durch die Antriebseinheit von Fig. 1 bis Fig. 10 mit einer alternativen Fixierung der Lageranordnung,
- Fig. 12: eine perspektivische Ansicht der Spindel mit der Ermittlungseinheit von Fig. 1, Fig. 5 bis Fig. 7 und Fig. 9 bis Fig. 11,
- Fig. 13: eine Draufsicht auf die Leiterplatte von Fig. 8 mit einem Absolutencoder,
- Fig. 14a-c: eine Draufsicht auf die Spindel von Fig. 1 bis Fig. 7 und Fig. 9 bis Fig. 12 mit der Leiterplatte von Fig. 8 und dem Strahlenumleiter von Fig. 1, Fig. 5, Fig. 6 und Fig. 9 bei einem Kalibriervorgang,
- Fig. 15a-d: eine Draufsicht auf die Spindel mit der Leiterplatte und dem Strahlenumleiter von Fig. 14a bis Fig. 14c bei einer Absolutpositionierung bei einem Start des Rotationslasers von Fig. 1,
- Fig. 16: einen teilweisen Längsschnitt durch den Rotationslaser von Fig. 1,
- Fig. 17: eine Explosionsansicht des Strahlenumleiters von Fig. 1, Fig. 5, Fig. 6, Fig. 9, Fig. 14a bis Fig. 16 mit einer Kappe,
- Fig. 18: eine Schnittansicht des Strahlenumleiters von Fig. 17 bei einer maximalen Auslenkung,
- Fig. 19: eine perspektivische Ansicht des Strahlenumleiters von Fig. 1, Fig. 5, Fig. 6, Fig. 9, Fig. 14a bis Fig. 18, und
- Fig. 20: eine Schnittansicht des Strahlenumleiters von Fig. 18 ohne Kappe, bei einer maximalen Auslenkung.

### Beschreibung der Ausführungsbeispiele

In den Figuren werden Elemente mit gleicher oder vergleichbarer Funktion mit identischen Bezugszeichen versehen und nur einmal genauer beschrieben.

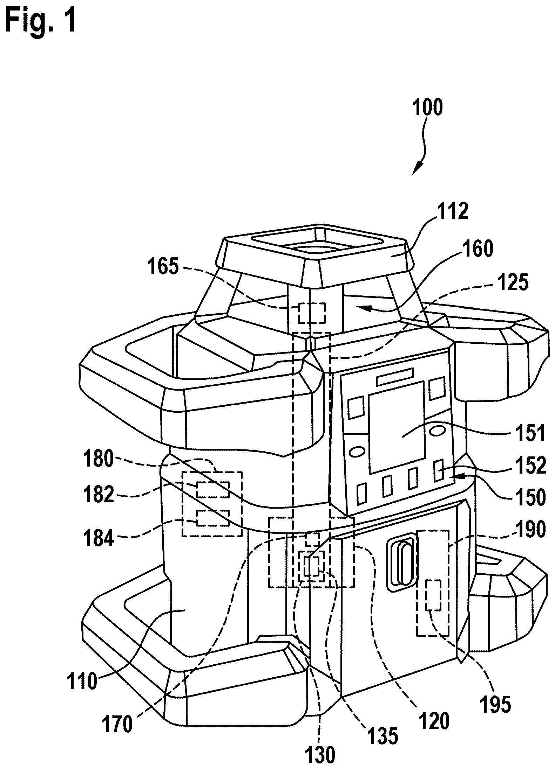

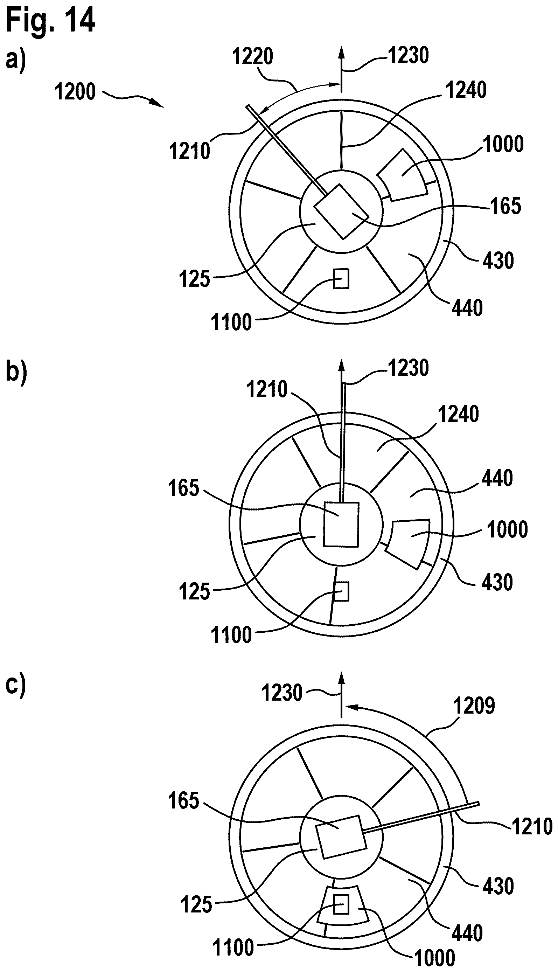

Fig. 1 zeigt einen beispielhaften Rotationslaser 100 mit einem Gehäuse 110, in dem eine Lasereinheit 130 mit einer Laserdiode 135 zur Erzeugung eines Laserstrahls (1210 in Fig. 14) angeordnet ist. Unter einem "Rotationslaser" kann im Kontext der vorliegenden Erfindung auch ein Baulaser oder ein Nivellierlaser verstanden werden. Des Weiteren ist in dem Gehäuse 110 beispielhaft eine Antriebseinheit 120 zum rotierenden Antrieb einer Spindel 125 angeordnet. Vorzugsweise ist die Antriebseinheit 120 als Elektromotor ausgebildet.

Die Lasereinheit 130 ist illustrativ derart an der Spindel 125 angeordnet, dass durch eine Rotation der Spindel 125 der von der Lasereinheit 130 erzeugte Laserstrahl (1210 in Fig. 14) in einer zugeordneten Ebene rotiert. Hierzu ist der Spindel 125 vorzugsweise ein Rotationskopf 160 mit einem Strahlenumleiter 165 zugeordnet. Der Strahlenumleiter 165 ist bevorzugt dazu ausgebildet, den Laserstrahl umzulenken, wodurch der Laserstrahl (1210 in Fig. 14) die zugeordnete Ebene projiziert. Je nach Bauart des Rotationslasers 100 kann die projizierte Ebene horizontal, vertikal oder z.B. mit einem definierten Neigungswinkel zur Erdoberfläche verlaufen. Darüber hinaus kann der Strahlenumleiter 165 als Strahlteiler ausgebildet sein, wodurch der Laserstrahl sowohl in die Ebene projiziert, als auch entlang einer senkrecht zur Ebene stehenden Richtung emittiert wird.

Darüber hinaus ist in dem Gehäuse 110 bevorzugt eine Elektronikeinheit 190 mit einer Regelungs- und Überwachungsvorrichtung 195 angeordnet. Die Regelungs- und Überwachungsvorrichtung 195 ist vorzugsweise zur Regelung einer Laserleistung der Lasereinheit 130 in Abhängigkeit von einer jeweiligen Betriebsart ausgebildet. Hierbei wird eine Rotationsgeschwindigkeit der Spindel 125 der Antriebseinheit 120 gesteuert oder geregelt. Hierzu ist der Spindel 125 bevorzugt eine Ermittlungseinheit 170 zugeordnet.

Beispielhaft ist dem Gehäuse 110 ein dem Rotationskopf 160 zugeordneter Käfig 112 zum Schutz vor einem Anschlagen des Rotationskopfs 160 zugeordnet.

Der Elektronikeinheit 190 ist illustrativ eine Bedieneinheit 150 mit einem Display 151 und einer Eingabeeinheit 152 zugeordnet. Die Bedieneinheit 150 ist dabei bevorzugt steuer- oder regelungstechnisch mit der Elektronikeinheit 190, insbesondere mit der Regelungs- und Überwachungsvorrichtung 195, verbunden. Die Eingabeeinheit 152 umfasst vorzugsweise zumindest ein Tastenfeld. Alternativ kann die Eingabeeinheit 152 einen Drehregler, einen Touchscreen, einen Schieberegler, eine Fernbedienung oder dergleichen aufweisen. Über die Eingabeeinheit 152 ist durch einen Nutzer z.B. eine Rotationsgeschwindigkeit für die Spindel 125 eingebbar. Alternativ kann die Rotationsgeschwindigkeit der Lasereinheit 130 in zumindest einer Betriebsart automatisch regelbar sein.

Vorzugsweise weist der Rotationslaser 100 eine Nivelliereinheit 180 auf. Die Nivelliereinheit 180 weist bevorzugt zumindest einen Neigungssensor 184 auf, der dazu ausgebildet ist, eine Neigung des Rotationskopfs 160, insbesondere des Strahlenumleiters 165, und/oder der Lasereinheit 130 zu einer vorgegebenen, bevorzugt horizontalen Richtung bzw. zu einem Lot, zu bestimmen. Darüber hinaus weist die Nivelliereinheit 180 vorzugsweise mindestens einen Neigungseinstellmotor 182 auf, der dazu ausgebildet ist, den Rotationskopf 160, insbesondere den Strahlenumleiter 165, und/oder die Lasereinheit 130, in Abhängigkeit von einer mittels des zumindest einen Neigungssensors 184 bestimmten Lage, vorzugsweise einer Neigung der Lasereinheit 130 und/oder des Rotationskopfs 160, bevorzugt zum Lot auszurichten.

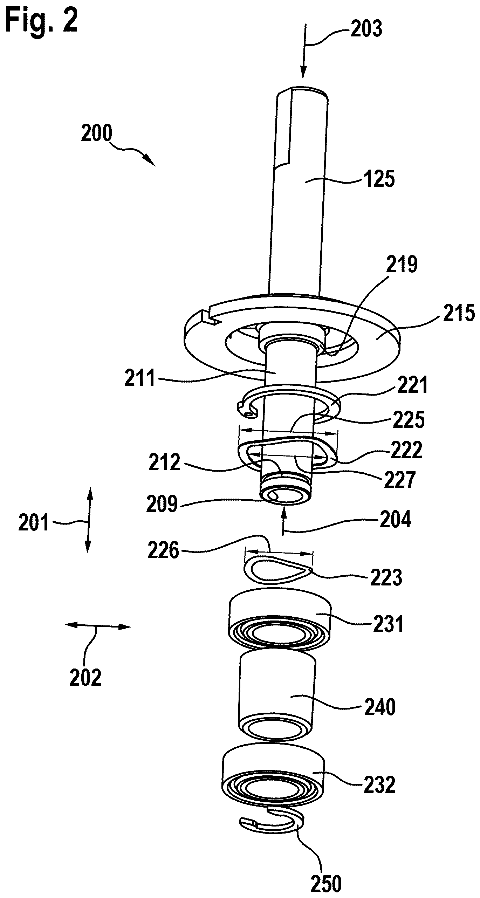

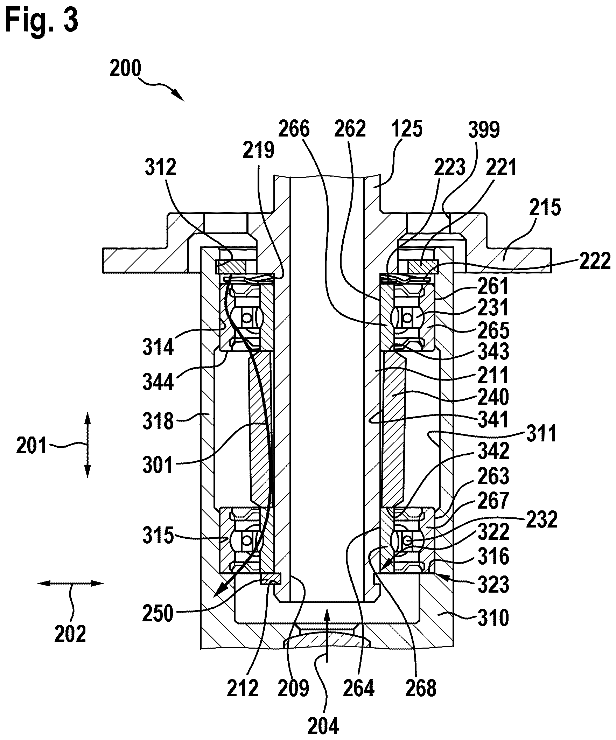

Fig. 2 zeigt die Spindel 125 der Antriebseinheit 120 des Rotationslasers 100 von Fig. 1. Die Spindel 125 weist ein erstes, illustrativ oberes Ende 203 und ein zweites, illustrativ unteres Ende 204 auf. Vorzugsweise ist am ersten Ende 203 der Strahlenumleiter 165 von Fig. 1 angeordnet. Am zweiten Ende 204 ist die Spindel 125 über eine Lageranordnung 200 in einem Stator (310 in Fig. 3) gelagert.

Vorzugsweise weist die Lageranordnung 200 zwei Lagerelemente 231, 232 auf, über die die Spindel 125 im Stator (310 in Fig. 3) gelagert ist. Bevorzugt ist ein Abstandselement 240 vorgesehen, welches die zwei Lagerelemente 231, 232 entlang einer Längserstreckung 201 der Spindel 125 voneinander beabstandet.

Bevorzugt ist der Spindel 125 ein Fixierelement 221 zum Fixieren bzw. Festlegen der Spindel 125 in Richtung ihrer Längserstreckung 201 am Stator (310 in Fig. 3) zugeordnet. Am zweiten Ende 204 der Spindel 125 ist vorzugsweise ein zugeordnetes Lagerelement 232 der zwei Lagerelemente 231, 232 mittels eines zusätzlichen Fixierelements 250 entlang der Längserstreckung 201 der Spindel 125 an der Spindel 125 gesichert. Bevorzugt weist die Spindel 125 an ihrem zweiten Ende 204 eine Aufnahme 212 zur Aufnahme des zusätzlichen Fixierelements 250 auf.

Vorzugsweise weist die Spindel 125 einen Magnetträger 215 auf. Bevorzugt ist die Spindel 125 mit dem Magnetträger 215 verbunden. Hierbei ist der Magnetträger 215 an einem Außenumfang 211 der Spindel 125 angeordnet und erweitert die Spindel 125 in radialer Richtung 202 der Spindel 125. Vorzugsweise ist der Magnetträger 215 scheibenförmig ausgebildet. Gemäß Fig. 2 ist der Magnetträger 215 einstückig mit der Spindel 125 ausgebildet. An einer dem zweiten Ende 204 der Spindel 125 zugewandten Seite des Magnetträgers 215 ist eine Anstehkante 219 ausgebildet.

Bevorzugt ist entlang der Längserstreckung 201 der Spindel 125 zwischen dem Fixierelement 221 und/oder dem zusätzlichen Fixierelement 250 und einem jeweils zugeordneten Lagerelement 231, 232 der zwei Lagerelemente 231, 232 mindestens ein Federelement 222, 223 angeordnet. Illustrativ sind zwischen dem Fixierelement 221 und dem Lagerelement 231 zwei Federelemente 222, 223 angeordnet. Das Federelement 222 weist einen Außendurchmesser 225 und einen Innendurchmesser 227 auf. Das Federelement 223 weist einen Außendurchmesser 226 auf. Ein Innendurchmesser des Federelements 223 ist vorzugsweise an einen Durchmesser der Spindel 125 angepasst. Bevorzugt ist der Innendurchmesser 227 des Federelements 222 größer als der Außendurchmesser 226 des Federelements 223. Das Fixierelement 221 und/oder das zusätzliche Fixierelement 250 kann z.B. als Sprengring ausgebildet sein.

Fig. 3 zeigt die mittels der Lageranordnung 200 von Fig. 2 in einem, der Antriebseinheit 120 von Fig. 1 zugeordneten Stator 310 gelagerte Spindel 125 von Fig. 1 und Fig. 2. Der Stator 310 weist beispielhaft einen zylindrischen Grundkörper 318 mit einer Innenaufnahme 311 auf. In der Innenaufnahme 311 ist illustrativ die Lageranordnung 200 zur Lagerung der Spindel 125 angeordnet.

Bevorzugt ist zumindest eines der zwei Lagerelemente 231, 232 auf den Außenumfang 211 der Spindel 125 aufgepresst und/oder zumindest eines der zwei Lagerelemente 231, 232 ist in eine der Innenaufnahme 311 zugeordnete Lagerstelle 314, 315 eingepresst. Hierdurch kann ein Spiel zwischen der Spindel 125 und dem zugeordneten Lagerelement 231, 232 zumindest im Wesentlichen, d.h. im Rahmen gebräuchlicher Herstellungstoleranzen, eliminiert werden.

Illustrativ ist eine obere Lagerstelle 314 dem Lagerelement 231 zugeordnet und eine illustrativ untere Lagerstelle 315 ist dem Lagerelement 232 zugeordnet. Vorzugsweise weist eine dem zweiten bzw. freien Ende 204 der Spindel 125 zugeordnete Lagerstelle 315 in der Innenaufnahme 311 eine Anlagefläche 316 zur Anlage des der Lagerstelle 315 zugeordneten Lagerelements 232 entlang der Längserstreckung 201 der Spindel 125 auf.

Die Lagerelemente 231, 232 sind vorzugsweise als Kugellager ausgebildet. Hierbei weist das Lagerelement 231 bevorzugt einen Innenring 266 und einen Außenring 265 auf. Der Außenring 265 bildet einen Außenumfang 261 des Lagerelements 231 aus und der Innenring 266 bildet einen Innenumfang 262 des Lagerelements 231 aus. Analog hierzu weist das Lagerelement 232 bevorzugt einen Innenring 268 und einen Außenring 267 auf. Der Außenring 267 bildet einen Außenumfang 263 des Lagerelements 232 aus und der Innenring 268 bildet einen Innenumfang 264 des Lagerelements 232 aus. Illustrativ sind der Innenumfang 262 des Lagerelements 231 und der Innenumfang 264 des Lagerelements 232 auf dem Außenumfang 211 der Spindel 125 angeordnet. Des Weiteren ist der Außenumfang 261 des Lagerelements 231 an der Lagerstelle 314 angeordnet und der Außenumfang 263 des Lagerelements 232 ist an der Lagerstelle 315 angeordnet.

Wie oben beschrieben, ist zwischen den beiden Lagerelementen 231, 232 beispielhaft das Abstandselement 240 angeordnet. Das Abstandselement 240 ist vorzugsweise hülsenförmig und weist eine Innenaufnahme 341 auf. Die Innenaufnahme 341 ist am Außenumfang 211 der Spindel 125 angeordnet. Illustrativ steht der Außenring 267 des Lagerelements 232 an der Anlagefläche 316 der Innenaufnahme 311 des Stators 310 entlang der Längserstreckung 201 der Spindel 125 an. Vorzugsweise liegt der Innenring 268 des Lagerelements 232 in Umfangsrichtung abschnittsweise am Fixierelement 250 an. Bevorzugt liegt eine dem Lagerelement 232 zugewandte Stirnseite 342 des Abstandselements 240 am Lagerelement 232 an. Illustrativ liegt die Stirnseite 342 des Abstandselements 240 am Innenring 268 des Lagerelements 232 an. Des Weiteren liegt eine dem Abstandselement 240 zugewandte Stirnseite 344 des Lagerelements 231 beispielhaft an einer dem Lagerelement 231 zugewandten Stirnseite 343 an. Illustrativ liegt der Innenring 266 des Lagerelements 231 an der Stirnseite 343 des Abstandselements 240 an.

Vorzugsweise sind, wie oben beschrieben, zwischen dem Fixierelement 221 und dem Lagerelement 231 zwei Federelemente 222, 223 angeordnet. Bevorzugt sind die Federelemente 222, 223 koaxial zueinander angeordnet. Alternativ oder optional ist zwischen dem illustrativ unteren Lagerelement 232 und dem zusätzlichen Fixierelement 250, bzw. an einer Stelle 322, ein Federelement 222 anordenbar und/oder an einer Stelle 323 ist ein Federelement 223 anordenbar. Vorzugsweise ist zumindest eines der zwei Federelemente 222, 223 als Wellenfeder ausgebildet. Ein Toleranzausgleich entlang der Längserstreckung 201 der Spindel 125 erfolgt bevorzugt über die Federelemente 222, 223.

An dieser Stelle sei darauf hingewiesen, dass auf das Federelement 223 sowie das Abstandselement 240 und das zusätzliche Fixierelement 250 bei einer Anordnung beider Lagerelemente 231, 232 an der Spindel 125 mittels Presspassung zwischen dem Innenumfang 262, 264 der Lagerelemente 231, 232 und dem Außenumfang 211 der Spindel 125 verzichtet werden kann, da in diesem Fall die jeweiligen Innenläufer der Lagerelemente 231, 232 in der Längserstreckung 201 der Spindel 125 relativ zueinander fixiert sind und damit die Notwendigkeit eines entsprechenden Toleranzausgleichs entfällt.

Vorzugsweise weist die Innenaufnahme 311 des Stators 310 eine Fixieraufnahme 312 auf, die zur Aufnahme des Fixierelements 221 ausgebildet ist. Bevorzugt ist das Fixierelement 221 in der Fixieraufnahme 312 angeordnet. Hierdurch kann die Spindel 125 mittels des Fixierelements 221 in Richtung ihrer Längserstreckung 201, bzw. in ihrer axialen Richtung, in der Innenaufnahme 311 fixiert bzw. festgelegt werden. Das Lagerelement 231 liegt dabei vorzugsweise an dem Fixierelement 221 an und fixiert somit die Spindel 125 in Richtung ihrer Längserstreckung 201, bzw. in ihrer axialen Richtung, in der Innenaufnahme 311.

Des Weiteren verdeutlicht Fig. 3 den Magnetträger 215 der Spindel 125, der entlang der radialen Richtung 202 der Spindel 125 beispielhaft zumindest die Innenaufnahme 311 abdeckt. Illustrativ überragt der Magnetträger 215 den Stator 310 in radialer Richtung 202 der Spindel 125. Vorzugsweise weist der Magnetträger 215 zumindest eine Ausnehmung 399 auf, um ein Zugreifen in die Innenaufnahme 311 des Stators 310 zu ermöglichen. Bevorzugt ermöglicht die zumindest eine Ausnehmung 399 einen Zugriff auf das in der Fixieraufnahme 312 fixierbare Fixierelement 221.

Bei einer Montage der Spindel 125 in dem Stator 310 erfolgt bevorzugt zuerst ein Anordnen des Fixierelements 221 an einem dem Magnetträger 215 zugewandten Bereich der Spindel 125. Anschließend können die vorzugsweise zwei Lagerelemente 231, 232 und das Abstandselement 240 am Außenumfang 211 der Spindel 125 angeordnet werden. Hierbei wird vorzugsweise zumindest eines der zwei Lagerelemente 231, 232 auf den Außenumfang 211 der Spindel 125 aufgepresst und/oder zumindest eines der zwei Lagerelemente 231, 232 wird in eine der Innenaufnahme 311 zugeordnete Lagerstelle 314, 315 eingepresst. Danach erfolgt bevorzugt ein Anordnen der Spindel 125 in der Innenaufnahme 311 des Stators 310. Abschließend kann das Fixierelement 221 in der Fixieraufnahme 312 des Stators 310 angeordnet werden. Hierbei wird vorzugsweise mittels eines Werkzeugs durch die Ausnehmung 399 des Magnetträgers 215 das Fixierelement 221 von dem dem Magnetträger 215 zugewandten Bereich der Spindel 125 in die Fixieraufnahme 312 bewegt. Bevorzugt wird vor dem Anordnen der Lagerelemente 231, 232 und des Abstandselements 240 auf der Spindel 125 am Ende 204 der Spindel 125 das zusätzliche Fixierelement 250 in der Aufnahme 212 angeordnet bzw. gesichert.

Ein Kraftfluss durch die Lagerelemente 231, 232 ist illustrativ mittels eines Pfeils 301 dargestellt. Bevorzugt erfolgt der Kraftfluss, der am Fixierelement 221 anliegt, durch das Federelement 222, das bevorzugt einen größeren Innendurchmesser 227 als das Federelement 223 hat. Hierbei wird der Kraftfluss vorzugsweise nicht durch das Federelement 223 kompensiert. Vielmehr wird der Kraftfluss bevorzugt durch das Federelement 222 in den Außenring 265 des illustrativ oberen Lagerelements 231 geleitet. Am Innenring 266 des Lagerelements 231 wird der Kraftfluss vorzugsweise über die dem Lagerelement 231 zugewandte Stirnseite 343 des Abstandselements 240 in das Abstandselement 240 geleitet. Über die dem illustrativ unteren Lagerelement 232 zugewandte Stirnseite 342 wird der Kraftfluss bevorzugt in den Innenring 268 des Lagerelements 232 geleitet. Alternativ hierzu kann der Kraftfluss über die obere Presspassung zwischen dem Innenumfang 262 des Innenrings 266 und dem Außenumfang 211 der Spindel 125 und über die untere Presspassung zwischen dem Außenumfang 211 der Spindel und dem Innenumfang 264 des Innenrings 268 geleitet werden. Abschließend wird der Kraftfluss vorzugsweise über den Außenring 267 des Lagerelements 232 in den Stator 310 abgeleitet.

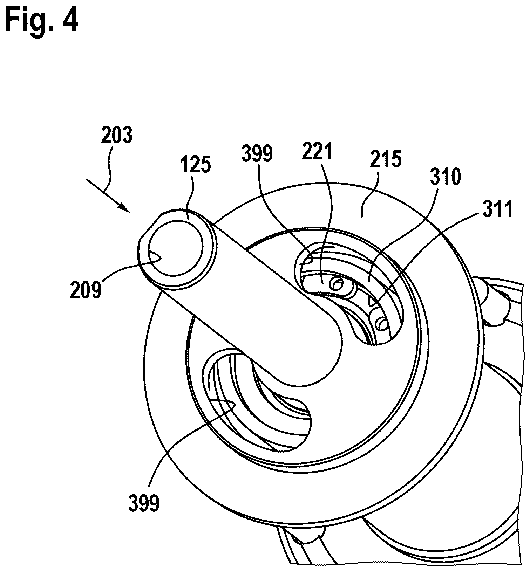

Fig. 4 zeigt die Spindel 125 mit dem Magnetträger 215, sowie den Stator 310 von Fig. 3, gesehen vom ersten Ende 203 aus. Dabei verdeutlicht Fig. 4 die zumindest eine, illustrativ zwei Ausnehmungen 399 des Magnetträgers 215 zum Eingreifen in die Innenaufnahme 311 des Stators 310 zum Positionieren des Fixierelements 221 in der Fixieraufnahme 312 der Innenaufnahme 311 von Fig. 3. Illustrativ sind die Ausnehmungen 399 zumindest annähernd bogenförmig. Die beispielhaft zwei Ausnehmungen 399 sind illustrativ diametral gegenüberliegend angeordnet.

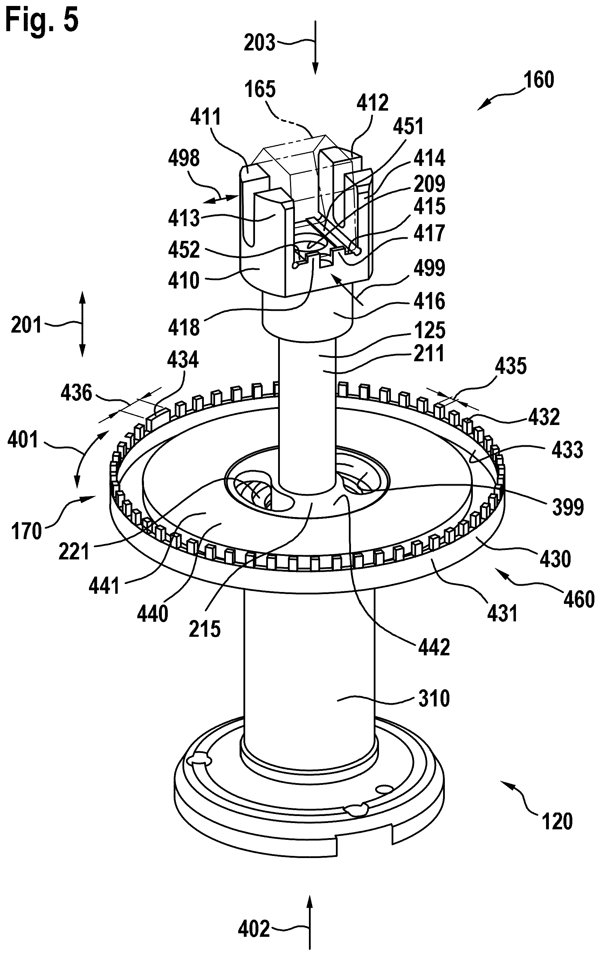

Fig. 5 zeigt die Spindel 125 mit dem Stator 310 von Fig. 1 bis Fig. 4 und dem Strahlenumleiter 165 von Fig. 1. Die Antriebseinheit 120 von Fig. 1 weist vorzugsweise den Stator 310 und einen Rotor 460 zum rotierenden Antrieb der Spindel 125 auf. Bevorzugt ist die Antriebseinheit 120 als Spindelmotor ausgebildet. Hierbei ist die Antriebseinheit 120 vorzugsweise als bürstenloser Gleichstrommotor ausgebildet.

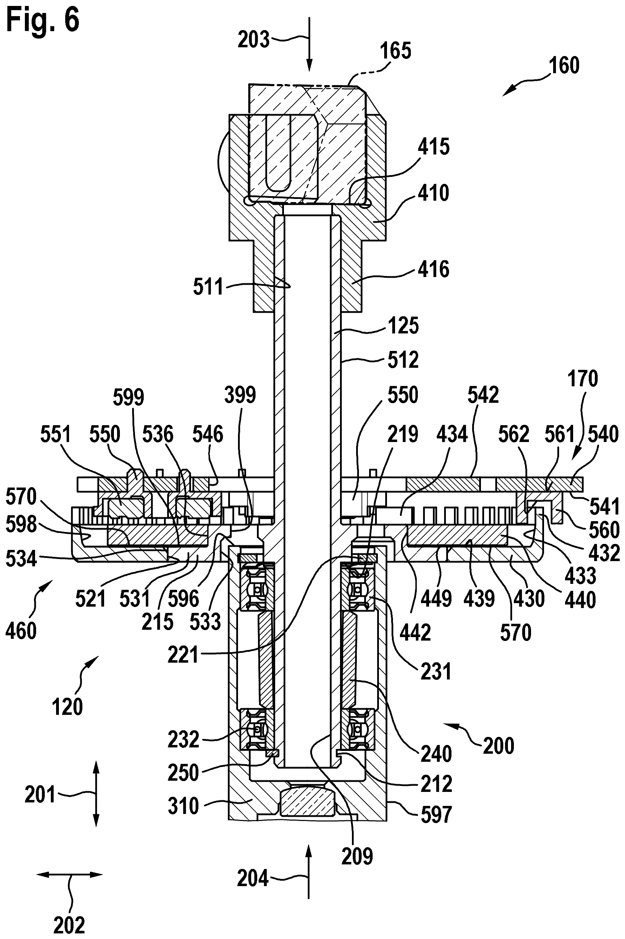

Dem Rotor 460 ist beispielhaft eine Magnetscheibe 440 zugeordnet und dem Stator 310 sind beispielhaft zwei Spulen (551 in Fig. 6) zugeordnet. Durch eine Bestromung der Spulen (551 in Fig. 6) kann die Spindel 125 in Rotation versetzt oder einem Haltemoment zur statischen Positionierung ausgesetzt werden.

Die Laserdiode 135 von Fig. 1 ist vorzugsweise an einem vom Strahlenumleiter 165 abgewandten Ende 402 des Stators 310 angeordnet. Ein durch die Laserdiode 135 erzeugter Laserstrahl wird dabei illustrativ entlang der Innenausnehmung 209 der Spindel 125 zum Strahlenumleiter 165 hin geleitet. Der Laserstrahl wird dabei durch den Strahlenumleiter 165 umgelenkt. Bevorzugt ist der Strahlenumleiter 165 als Pentaprisma ausgebildet. Unter einem Pentaprisma, auch Pentagonalprisma, wird ein fünfseitiges optisches Prisma verstanden. Dabei werden von den fünf Flächen zwei als innere Reflexionsflächen genutzt. Vorzugsweise wird der Laserstrahl in eine senkrechte Richtung umgelenkt. Durch die Rotation der Spindel 125 kann beim Umlenken des Laserstrahls somit eine zugeordnete Ebene projiziert werden. Darüber hinaus kann der Strahlenumleiter 165 als Strahlteiler ausgebildet sein, der den durch die Laserdiode 135 erzeugten Laserstrahl in einen parallelen (illustrativ entlang der Längserstreckung 201 nach oben ausgestrahlten) und einen senkrechten Laserstrahl aufteilt.

Vorzugsweise ist der Spindel 125 die Ermittlungseinheit 170 von Fig. 1 zugeordnet. Die Ermittlungseinheit 170 weist beispielhaft eine Zahnscheibe 430 und eine Lichtschranke (560 in Fig. 6) auf. Die Zahnscheibe 430 weist illustrativ einen Grundkörper 431 auf. Vorzugsweise ist der Grundkörper 431 schalenförmig mit einer Aufnahme 433 ausgebildet. Die Aufnahme 433 ist vorzugsweise zur zumindest teilweisen Aufnahme der Magnetscheibe 440 ausgebildet. Bevorzugt weist die Zahnscheibe 430 in Umfangsrichtung 401 verteilt angeordnete Zähne 432 auf. Die Zähne 432 sind dabei illustrativ an einem Außenumfang der Zahnscheibe 430 entlang der Längserstreckung 201 der Spindel 125 ausgebildet.

Vorzugsweise weist die Ermittlungseinheit 170 eine Referenzmarke 434 als Absolutreferenz auf. Die Referenzmarke 434 ist bevorzugt der Zahnscheibe 430 zugeordnet. Die Referenzmarke 434 kann z.B. als Referenzzahn oder Referenzausnehmung ausgebildet sein. Hierbei weisen die Zähne 432 der Zahnscheibe 430 eine erste Breite 435 auf und der Referenzzahn 434 oder die Referenzausnehmung weist eine zweite Breite 436 auf. Die zweite Breite 436 ist bevorzugt größer als die erste Breite 435.

Die Magnetscheibe 440 weist vorzugsweise einen zumindest abschnittsweisen ringförmigen Grundkörper 441 auf. Der illustrativ ringförmige Grundkörper 441 weist bevorzugt eine Innenaufnahme 442 auf. Die Innenaufnahme 442 ist vorzugsweise an der inneren Schulter (536 in Fig. 6) des Magnetträgers 215 der Spindel 125 angeordnet. Alternativ kann die Magnetscheibe 440 mindestens zwei Magnetteile aufweisen. Vorzugsweise ist die Magnetscheibe 440 als Permanentmagnet mit N Polpaaren ausgebildet. Der Magnetträger 215 der Spindel 125 und die Zahnscheibe 430 können einstückig ausgebildet sein.

An ihrem vom Stator 310 abgewandten Ende 203 weist die Spindel 125 illustrativ den Rotationskopf 160 mit dem Strahlenumleiter 165 auf. Der Strahlenumleiter 165 weist beispielhaft eine Halterung 410 auf, mittels der er am Ende 203 der Spindel 125 angeordnet ist. Hierzu weist die Halterung 410 bevorzugt einen Befestigungsabschnitt 416 zur Anordnung am ersten Ende 203 der Spindel 125 auf. Vorzugsweise ist der Befestigungsabschnitt 416 einstückig mit der Halterung 410 ausgebildet. Alternativ kann der Befestigungsabschnitt 416 mit der Halterung 410 verbunden sein. Illustrativ ist der Befestigungsabschnitt 416 am Außenumfang 211 der Spindel 125 angeordnet. Bevorzugt ist der Befestigungsabschnitt 416 mit der Spindel 125 verbunden. Des Weiteren weist die Halterung 410 zumindest zwei, illustrativ vier Aufnahmeelemente 411, 412, 413, 414 auf, welche eine bevorzugt zentrale Aufnahme 415 ausbilden. In der Aufnahme 415 ist vorzugsweise der Strahlenumleiter 165 aufnehmbar. Illustrativ ist der Strahlenumleiter 165 in der Aufnahme 415 aufgenommen. Hierbei sind die mindestens zwei Aufnahmeelemente 411, 412, 413, 414 bevorzugt dazu ausgebildet, den Strahlenumleiter 165 in der Aufnahme 415 mechanisch zu fixieren.

Die zumindest zwei Aufnahmeelemente 411, 412, 413, 414 sind vorzugsweise als entlang der Längserstreckung 201 der Spindel 125 ausgebildete Stege ausgebildet. Die Aufnahmeelemente 411, 412, 413, 414 sind bevorzugt von der Spindel 125 abgewandt angeordnet. Die zumindest zwei Aufnahmeelemente 411, 412, 413, 414 sind illustrativ einstückig mit der Halterung 410 ausgebildet. Alternativ können die zumindest zwei Aufnahmeelemente 411, 412, 413, 414 mit der Halterung 410 verbunden sein.

Die Aufnahme 415 weist bevorzugt zumindest eine, illustrativ zwei Positionierungsflächen 451, 452 zum Positionieren des Strahlenumleiters 165 auf. Die Positionierungsflächen 451, 452 sind dabei vorzugsweise auf einer der Spindel 125 zugewandten Bodenfläche angeordnet. An zumindest einer Stirnseite 499 der zwei Positionierungsflächen 451, 452 kann mindestens ein, illustrativ zwei Anschläge 417, 418 ausgebildet sein. Die Anschläge 417, 418 sind beispielhaft in Längserstreckung 201 der Spindel 125 ausgebildet und bilden illustrativ eine Anstehkante für den Strahlenumleiter 165 aus. Bevorzugt sind die Aufnahmeelemente 411, 412, 413, 414 und/oder die Anschläge 417, 418 einstückig mit der Halterung 410 ausgebildet. Vorzugsweise sind die Aufnahmeelemente 411, 412, 413, 414 und/oder die Anschläge 417, 418 mit der Halterung 410 über eine Verbindung verbunden.

Illustrativ sind zwei Aufnahmeelemente 411, 413 links vom Strahlenumleiter 165 angeordnet und zwei Aufnahmeelemente 412, 414 sind illustrativ rechts vom Strahlenumleiter 165 angeordnet. Hierbei sind die illustrativ linken Aufnahmeelemente 411, 413 und die illustrativ rechten Aufnahmeelemente 412, 414 vorzugsweise in Querrichtung 498 zur Stirnseite 499 voneinander beabstandet. Alternativ oder optional ist der Strahlenumleiter 165 mittels zumindest einer Klebverbindung in der Aufnahme 415 fixiert.

Fig. 6 zeigt die Antriebseinheit 120 mit der Spindel 125, dem Stator 310, dem Rotor 460, dem Strahlenumleiter 165 und der Ermittlungseinheit 170 von Fig. 5. Dabei verdeutlich Fig. 6 eine illustrativ der Ermittlungseinheit 170 zugeordnete Lichtschranke 560. Die Lichtschranke 560 ist vorzugsweise zur Ermittlung einer relativen Änderung einer Winkelstellung der Spindel 125 in Umfangsrichtung 401 von Fig. 5 vorgesehen.

Die Lichtschranke 560 ist vorzugsweise als Quadraturencoder ausgebildet. Ein derartiger Quadraturencoder weist bevorzugt zwei Lichtschranken auf, die bevorzugt mit einem Versatz in Umfangsrichtung 401 von Fig. 4 von einer halben Zahnbreite bzw. einer halben ersten Breite 435 zueinander angeordnet sind. Alternativ kann der Versatz eine halbe Zahnbreite plus ein ganzzahliges Vielfaches der Zahnbreite betragen. Durch eine Messung eines der Zahnscheibe 430 zugeordneten Zahnmusters an zwei Positionen mit einem Phasenversatz von beispielhaft 90° lässt sich die Rotationsrichtung schrittweise ermitteln. Den vorzugsweise zwei Lichtschranken ist bevorzugt eine gemeinsame Lichtquelle zugeordnet. Des Weiteren sind den vorzugsweise zwei Lichtschranken zwei bevorzugt separate Fotodioden oder Fototransistoren zugeordnet.

Die Lichtschranke 560 weist illustrativ eine Bodenfläche 561 und eine vorzugsweise U-förmige Aufnahme 562 auf. In der U-förmigen Aufnahme 562 sind vorzugsweise die Zähne 432 der Zahnscheibe 430 zumindest abschnittsweise aufgenommen. Die Bodenfläche 561 der Lichtschranke 560 ist illustrativ an einer der Zahnscheibe 430 zugewandten Unterseite 541 einer Leiterplatte 540 angeordnet.

Die Leiterplatte 540 ist vorzugsweise im Gehäuse 110 des Rotationlasers 100 von Fig. 1 angeordnet. Hierbei ist die Leiterplatte 540 bevorzugt parallel zur Zahnscheibe 430 angeordnet. Beispielhaft weist die Leiterplatte 540 eine Innenausnehmung 546 zur koaxialen Anordnung an der Spindel 125 auf. Die Leiterplatte 540 weist illustrativ eine Oberseite 542 auf, die dem Strahlenumleiter 165 zugewandt angeordnet ist und die Unterseite 541, die beispielhaft der Zahnscheibe 430 zugewandt angeordnet ist. Bevorzugt weist die Leiterplatte 540 zwei Spulen 551 auf. Die Spulen 551 sind illustrativ an der Unterseite 541 der Leiterplatte 540 angeordnet. Bevorzugt sind die Spulen 551 mittels Spulenhaltern 550 an der Leiterplatte 540 angeordnet. Vorzugsweise sind die Spulenhalter 550 an der Leiterplatte 540 fixiert.

Illustrativ ist die Innenausnehmung 442 der Magnetscheibe 440 an einer inneren Schulter 536 des Magnetträgers 215 angeordnet. Hierdurch kann auf einfache Art und Weise eine Zentrierung der Magnetscheibe 440 erfolgen. Der Magnetträger 215 weist vorzugsweise einen Umfangskragen 531 auf, der den Magnetträger 215 in radialer Richtung erweitert. Des Weiteren liegt die Magnetscheibe 440 illustrativ an dem Umfangskragen 531 entlang der Längserstreckung 201 der Spindel 125 an bzw. die Magnetscheibe 440 liegt auf einer dem Strahlenumleiter 165 zugewandten Oberseite 599 des Umfangskragens 531 zumindest abschnittsweise auf.

Bevorzugt weist die Zahnscheibe 430 eine Innenausnehmung 521 auf, die an einem Außenumfang 534 des Umfangskragens 531 angeordnet ist. Vorzugsweise bilden die Aufnahme 433 und der Umfangskragen 531, bzw. die Oberseite 599 des Umfangskragens 531, eine Aufnahme 598 zur Aufnahme der Magnetscheibe 440 aus. Darüber hinaus weist der Magnetträger 215 illustrativ eine dem Stator 310 zugewandte Innenaufnahme 533 auf. Die Innenaufnahme 533 ist vorzugsweise zur abschnittsweisen Aufnahme des Stators 310 ausgebildet. Bevorzugt ist der Stator 310 koaxial zur Innenaufnahme 533 angeordnet. Hierbei ist ein Außenumfang 597 des Stators 310 vorzugsweise in radialer Richtung 202 von der Innenaufnahme 533 beabstandet. Des Weiteren ist eine dem Magnetträger 215 zugewandte Stirnseite 596 des Stators 310 vorzugsweise vom Magnetträger 215 beabstandet. Somit kann der Stator 310 im Gehäuse 110 des Rotationslasers 100 von Fig. 1 angeordnet werden und die Spindel 125 kann mit dem Magnetträger 215 kollisionsfrei rotieren, wobei gleichzeitig eine kompakte Anordnung des Stators 310 und des Magnetträgers 215 mit dem Umfangskragen 531 ermöglicht werden kann.

Vorzugsweise ist die Magnetscheibe 440 mittels einer stoffschlüssigen Verbindung in der Aufnahme 598 bzw. 433 fixiert. Bevorzugt ist zwischen einer beispielhaft der Magnetscheibe 440 zugeordneten und der Zahnscheibe 430 zugewandten Unterseite 449 der Magnetscheibe 440 und einer illustrativ der Magnetscheibe 440 zugewandten Bodenfläche 439 der Zahnscheibe 430 ein Klebstoff 570 zur beispielhaften Ausbildung der stoffschlüssigen Verbindung angeordnet. Hierdurch kann auch die Zahnscheibe 430 am Umfangskragen 531 des Magnetträgers 215 fixiert werden. Der Klebstoff 570 kann zur Ausbildung der beispielhaften stoffschlüssigen Verbindung z.B. als doppelseitiges Klebeband ausgebildet sein.

Darüber hinaus verdeutlicht Fig. 6 beispielhaft eine dem Befestigungsabschnitt 416 der Halterung 410 zugeordnete Innenaufnahme 511. Die Innenaufnahme 511 ist bevorzugt zur Anordnung am Außenumfang 211 der Spindel 125 ausgebildet. Vorzugsweise weist die Spindel 125 an ihrem illustrativ oberen Ende 203 eine Aufnahme 512 auf, die in der Innenaufnahme 511 der Halterung 410 anordenbar ist. Die Innenaufnahme 511 weist dabei illustrativ einen dem Außenumfang 211 der Aufnahme 512 der Spindel 125 zugeordneten Durchmesser auf.

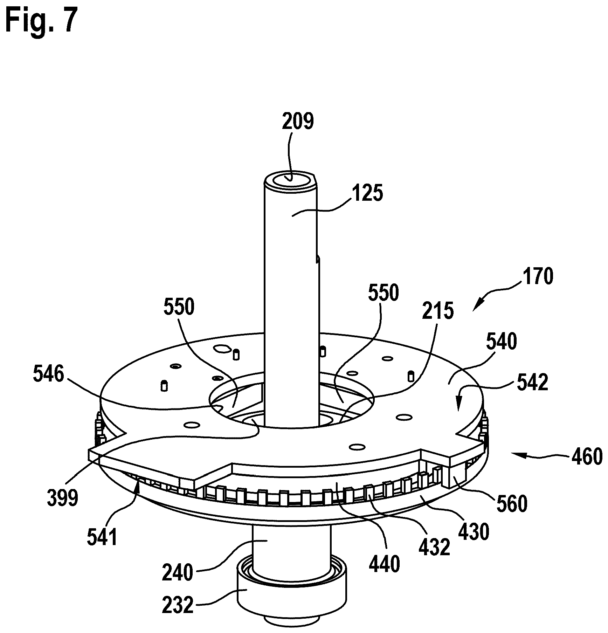

Fig. 7 zeigt die Spindel 125 mit dem Rotor 460 bzw. der Zahnscheibe 430, der Magnetscheibe 440 sowie der Leiterplatte 540 mit den zwei Spulenhaltern 550 von Fig. 6. Dabei verdeutlicht Fig. 7 die koaxiale Anordnung der Leiterplatte 540 zur Spindel 125. Durch die Innenausnehmung 546 der Leiterplatte 540 und die zumindest eine Ausnehmung 399 des Magnetträgers 215 der Spindel 125 kann das Fixierelement 221 von Fig. 2 bis Fig. 6 zur Fixierung im Stator 310 von Fig. 3 bis Fig. 6 in der Fixieraufnahme 312 von Fig. 3 angeordnet werden.

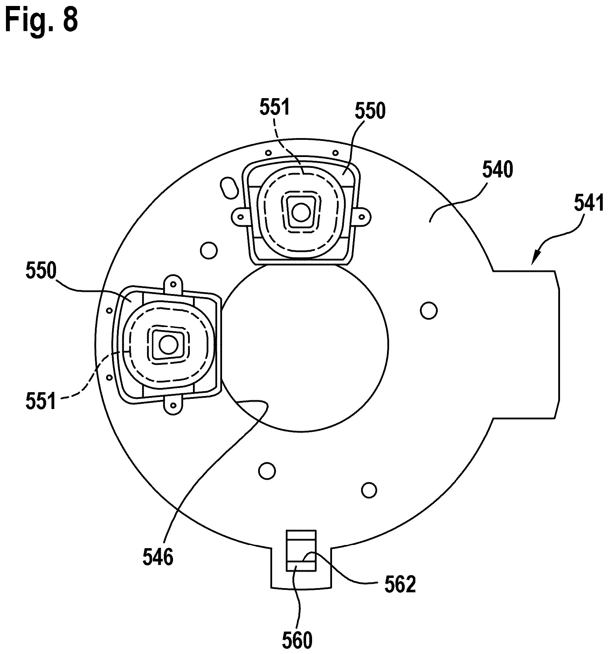

Fig. 8 zeigt die Leiterplatte 540 von Fig. 5 und Fig. 6 von ihrer Unterseite 541 aus gesehen. Wie oben beschrieben, sind vorzugsweise zwei Spulen 551 mittels eines Spulenhalters 550 an der Unterseite 541 der Leiterplatte 540 angeordnet. Des Weiteren ist die Lichtschranke 560 bevorzugt an der Unterseite 541 der Leiterplatte 540 angeordnet. Illustrativ sind die beiden Spulen 551 um 90° versetzt zueinander angeordnet. Bevorzugt ist die Lichtschranke 560 gegenüberliegend, bzw. um 180° versetzt zu einer der zwei Spulen 551 angeordnet.

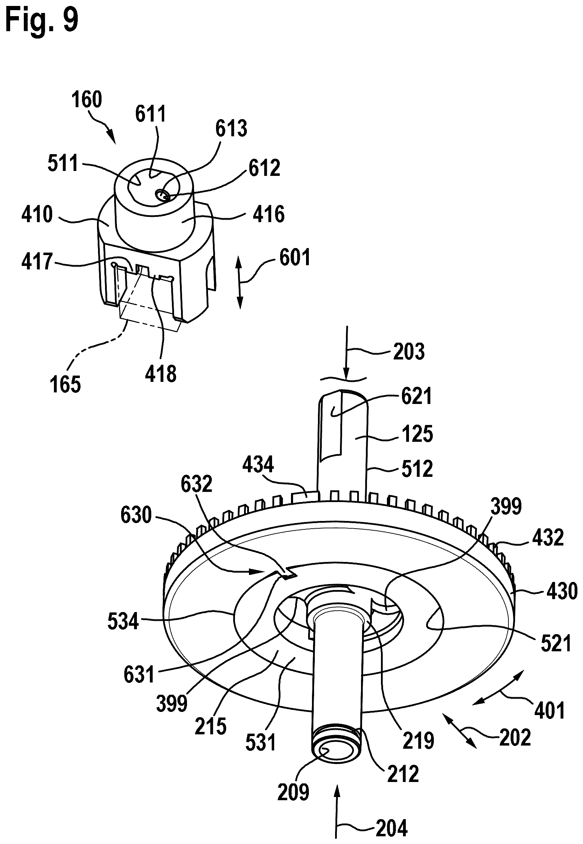

Fig. 9 zeigt die Spindel 125 von Fig. 1 bis Fig. 8 mit der Zahnscheibe 430 und dem Strahlenumleiter 165 von Fig. 5 und Fig. 6. Gemäß Fig. 9 weist die Zahnscheibe 430 an ihrer Innenausnehmung 534 vorzugsweise zumindest ein erstes Formschlusselement 632 auf und der Umfangskragen 531 des Magnetträgers 215 der Spindel 125 weist illustrativ an seinem Außenumfang 534 zumindest ein zweites Formschlusselement 631 auf. Das zumindest eine erste und zweite Formschlusselement 632, 631 bilden beispielhaft einen Formschluss 630 aus.

Illustrativ ist das erste Formschlusselement 632 der Zahnscheibe 430 als Erweiterung in radialer Richtung 202 der Spindel 125 ausgebildet und das zweite Formschlusselement 631 des Magnetträgers 215 ist als Ausnehmung in radialer Richtung 202 der Spindel 125 ausgebildet. Alternativ ist das zweite Formschlusselement 631 des Magnetträgers 215 als Erweiterung in radialer Richtung 202 der Spindel 125 ausgebildet und das erste Formschlusselement 632 der Zahnscheibe 430 ist als Ausnehmung in radialer Richtung 202 der Spindel 125 ausgebildet. Darüber hinaus können die Zahnscheibe 430 und der Magnetträger 215 auch mehrere, in Umfangsrichtung 401 der Spindel 125 verteilt angeordnete erste und zweite Formschlusselemente 632, 631 aufweisen.

Bevorzugt weist die Spindel 125 zur Positionierung des Strahlenumleiters 165 am ersten Ende 203 eine Abflachung 621 auf. Die Abflachung 621 ist bevorzugt an der Aufnahme 512 der Spindel 125 angeordnet. Die Halterung 410 des Strahlenumleiters 165 weist, wie oben beschrieben, vorzugsweise den Befestigungsabschnitt 416 mit der korrespondierenden Innenaufnahme 511 auf. Bevorzugt weist die Innenaufnahme 511 des Befestigungsabschnitts 416 eine der Abflachung 621 der Spindel 125 zugeordnete Abflachung 611 auf. Vorzugsweise weist die Abflachung 611 der Innenaufnahme 511 der Halterung 410 eine Ausnehmung 613 auf, in der ein Klemmelement 612 angeordnet ist. Die Ausnehmung 613 ist illustrativ in radialer Richtung 601 der Innenaufnahme 511 ausgebildet. Bevorzugt ist die Ausnehmung 613 als Gewindeausnehmung ausgebildet und das Klemmelement 612 ist eine Schraube, insbesondere eine Madenschraube.

Ist die Halterung 410 des Strahlenumleiters 165 bzw. die Innenaufnahme 511 auf der Aufnahme 512 der Spindel 125 angeordnet, so sind die beiden Abflachungen 621, 611 vorzugsweise anliegend zueinander angeordnet. Somit kann eine definierte Positionierung der Halterung 410, insbesondere des Strahlenumleiters 165, an der Spindel 125 erfolgen. Durch ein Einschrauben des Gewindestifts 612 kann der Gewindestift 612 gegen die Abflachung 621 der Spindel 125 beaufschlagt werden und die Halterung 410 kann somit den Strahlenumleiter 165 an der Spindel 125 fixieren.

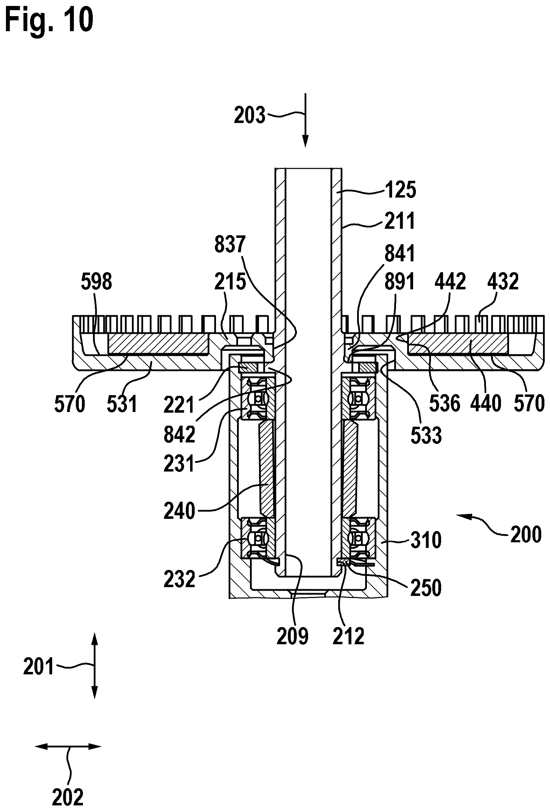

Fig. 10 zeigt die Spindel 125 von Fig. 1 bis Fig. 9, die illustrativ mittels der Lagerandordnung 200 von Fig. 2, Fig. 3 und Fig. 6 im Stator 310 gelagert ist, sowie mit der Zahnscheibe 430 von Fig. 5 bis Fig. 7 und Fig. 9. Die Zahnscheibe 430 von Fig. 10 ist illustrativ einteilig mit dem Magnetträger 215 von Fig. 2 bis Fig. 6 und Fig. 9 ausgebildet. Der Magnetträger 215 weist hierzu vorzugsweise einen Lagerungsabschnitt 841 mit einer Innenaufnahme 837 auf. Die Innenaufnahme 837 ist beispielhaft am Außenumfang 211 der Spindel 125 angeordnet. Zur Lagefixierung der Zahnscheibe 430 bzw. des Magnetträgers 215 weist die Spindel 125 vorzugsweise entlang ihrer Längserstreckung 201 einen Umfangskragen 842 auf. Der Lagerungsabschnitt 841 steht zur Lagefixierung der Zahnscheibe 430 bevorzugt entlang der Längserstreckung 201 der Spindel 125 an einer dem ersten Ende 203 der Spindel 125 zugewandten Seite 891 an.

Vorzugsweise bildet die Zahnscheibe 430 von Fig. 10 die Aufnahme 598 zur Aufnahme der Magnetscheibe 440 aus. Die Innenaufnahme 442 der Magnetscheibe 440 ist vorzugsweise an der inneren Schulter 536 des Magnetträgers 215 angeordnet, wobei die innere Schulter 536 gemäß der einteiligen Ausbildung der Zahnscheibe 430 und des Magnetträgers 215 der Zahnscheibe 430 zugeordnet ist. Analog zu Fig. 6 ist die Magnetscheibe 440 vorzugsweise mittels einer Klebverbindung mit dem Klebstoff 570 in der Aufnahme 598 fixiert.

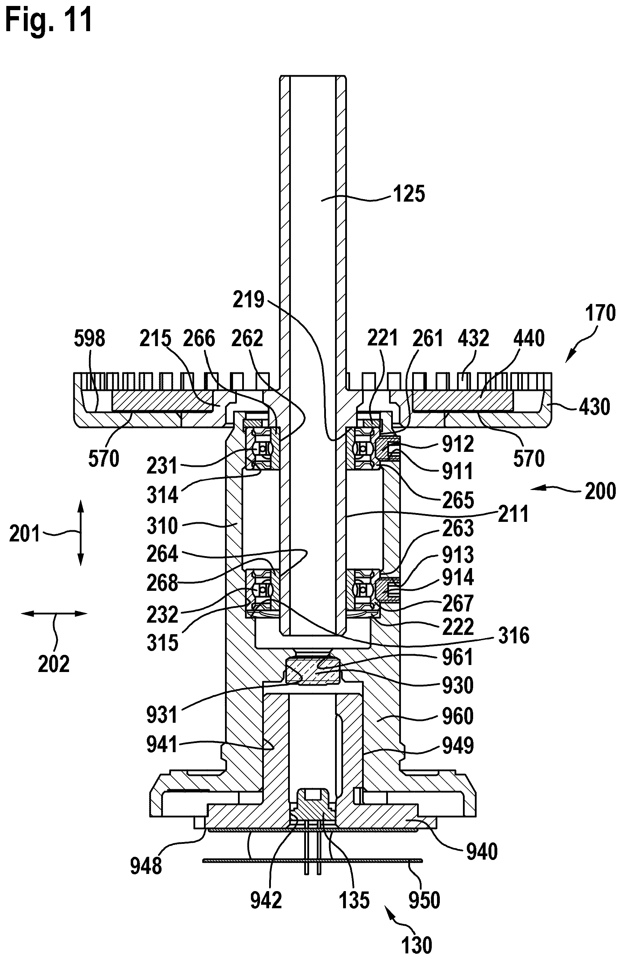

Fig. 11 zeigt die Spindel 125 von Fig. 1 bis Fig. 10 mit dem Stator 310 von Fig. 3 bis Fig. 6 und Fig. 10. Bevorzugt weist der Stator 310 mindestens eine Ausnehmung 911, 913 auf, die senkrecht zur Innenaufnahme 311 angeordnet ist. Die mindestens eine Ausnehmung 911, 913 ist illustrativ entlang der Längserstreckung 201 der Spindel 125 im Bereich mindestens einer Lagerstelle 314, 315 angeordnet. Bevorzugt ist zwischen einem der mindestens einen Ausnehmung 911, 913 zugeordneten Klemmelement 912, 914 und einem Außenumfang 261, 263 eines der zwei Lagerelemente 231, 232 eine Klemmverbindung ausgebildet. Beispielhaft ist zwischen dem Außenumfang 261 des illustrativ oberen Lagerelements 231 und dem Klemmelement 912 eine erste Klemmverbindung ausgebildet und zwischen dem Außenumfang 263 des illustrativ unteren Lagerelements 232 und dem Klemmelement 914 ist eine zweite Klemmverbindung ausgebildet. Beispielhaft sind die Klemmelemente 912, 914 als Schrauben, insbesondere Madenschrauben, ausgebildet. Durch die Klemmelemente 912, 914 kann ein Spiel zwischen dem Stator 310 und dem zugeordneten Lagerelement 231, 232 zumindest im Wesentlichen, d.h. im Rahmen gebräuchlicher Herstellungstoleranzen, eliminiert werden.

Darüber hinaus verdeutlicht Fig. 11 die Lasereinheit 130 von Fig. 1. Die Lasereinheit 130 weist illustrativ ein Lasermodulgehäuse 960 mit einer Innenaufnahme 961 zum Ausgeben bzw. Ausstrahlen eines durch die Laserdiode 135 erzeugten und kollimierten Laserstrahls auf. Das Lasermodulgehäuse 960 kann einstückig mit dem Stator 310 ausgebildet sein.

Zur Kollimation des Laserstrahls weist die Lasereinheit 130 vorzugsweise eine Kollimationslinse 930 auf. Hierbei ist die Kollimationslinse 930 bevorzugt in einem illustrativ oberen Aufnahmeabschnitt 931 der Innenaufnahme 961 des Lasermodulgehäuses 960 angeordnet und bevorzugt fixiert. Die Kollimationslinse 930 ist vorzugsweise mittels einer stoffschlüssigen Verbindung und/oder einer Pressverbindung in der Innenaufnahme 961, bzw. dem Aufnahmeabschnitt 931, fixiert.

Des Weiteren ist illustrativ ein Laserdioden-Halter 940 in der Innenaufnahme 961, insbesondere in einem illustrativ unteren Aufnahmeabschnitt 941, angeordnet. Bevorzugt ist dabei zumindest abschnittsweise zwischen einem Außenumfang 949 des Laserdioden-Halters 940 und dem Aufnahmeabschnitt 941 eine Pressverbindung ausgebildet. Alternativ kann der Laserdioden-Halter 940 über eine stoffschlüssige Verbindung in der Innenaufnahme 961, bzw. dem Aufnahmeabschnitt 941, fixiert sein.

Der Laserdioden-Halter 940 weist illustrativ eine Innenaufnahme 942 auf. In der Innenaufnahme 942 ist vorzugsweise die Laserdiode 135 zur Erzeugung eines Laserstrahls angeordnet. Die Laserdiode 135 ist bevorzugt auf einer Leiterplatte 950 angeordnet. Vorzugsweise ist die Leiterplatte 950 als flexible Leiterplatte ausgebildet. Illustrativ ist die Leiterplatte 950 an einer vom Stator 310 abgewandten Unterseite 948 des Laserdioden-Halters 940 angeordnet. Bevorzugt ist die Leiterplatte 950 mittels einer stoffschlüssigen Verbindung am Laserdioden-Halter 940 fixiert. Gemäß einer Ausführungsform ist die stoffschlüssige Verbindung eine Klebverbindung. Hierbei ist vorzugsweise das Klebemittel ein doppelseitiges Klebeband.

Der Laserdiode 135 ist bevorzugt eine Monitordiode zugeordnet. Die Monitordiode ist vorzugsweise zur Messung einer der Laserdiode 135 zugeordneten Laserleistung ausgebildet. Hierbei kann die Monitordiode eine in die Laserdiode 135 integrierte Monitordiode sein. Bevorzugt weist die Lasereinheit 130 eine nicht dargestellte Fotodiode auf, die für eine von der Monitordiode unabhängige Messung der Laserleistung vorgesehen ist.

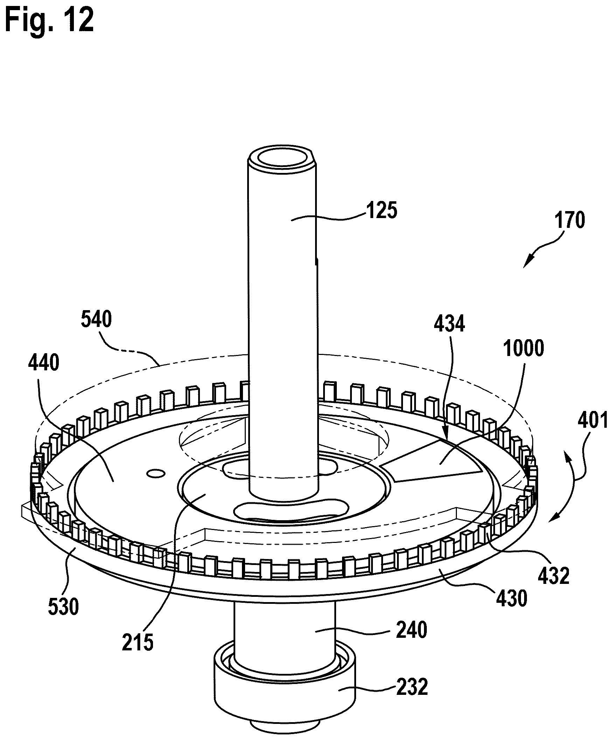

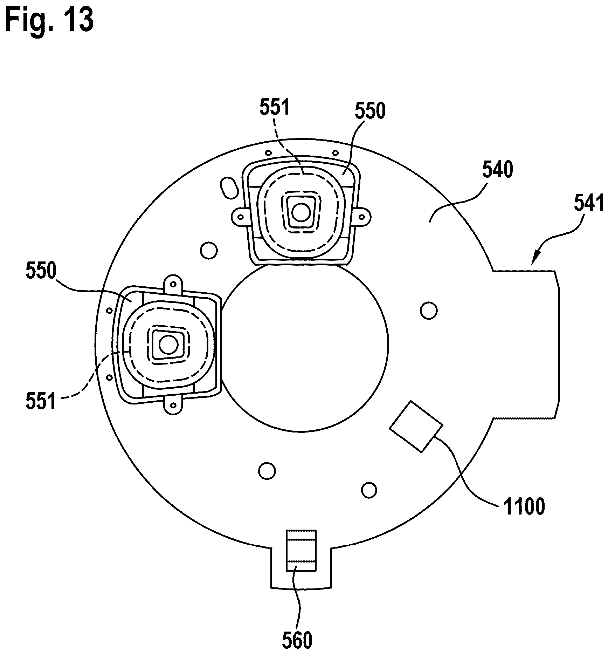

Fig. 12 zeigt die Spindel 125 von Fig. 1 bis Fig. 11 mit der Zahnscheibe 430, der Magnetscheibe 440, sowie der Leiterplatte 540, die zur besseren Verdeutlichung transparent dargestellt ist. Die Zahnscheibe 430 weist gemäß Fig. 12 lediglich die am Außenumfang verteilt angeordneten Zähne 432 mit der ersten Breite 435 auf. Illustrativ ist die Referenzmarke 434 als Positioniermerkmal 1000 auf der Magnetscheibe 440 ausgebildet und mit einem Absolutencoder (1100 in Fig. 13) wirkverbunden.

Hierbei ist eine mechanisch definierte Ausrichtung des Strahlenumleiters 165, der Magnetscheibe 440 und der Zahnscheibe 430 zueinander nicht erforderlich. Eine Absolutpositionierung erfolgt bevorzugt mittels eines zusätzlichen Bauteils, z.B. eines reflektiven Lichtsensors, hier beispielhaft in Form eines Absolutencoders (1100 in Fig. 11) auf der Leiterplatte 540 sowie eines Positioniermerkmals 1000 auf der Magnetscheibe 440. Das Positioniermerkmal 1000 ist vorzugsweise ein reflektierender oder lichtabsorbierender Aufkleber.

Das Positioniermerkmal 1000 ist bevorzugt dazu ausgebildet, eines der Polpaare der Magnetscheibe 440 zu identifizieren. Umfasst die Magnetscheibe 440 N Polpaare, so muss das Positioniermerkmal 1000 die Identifikation eines Winkelbereichs einer Breite kleiner als 360°/N erlauben. Bevorzugt weist das Positioniermerkmal 1000 in Umfangsrichtung 401 der Spindel 125 eine Breite von 180°/N auf. Innerhalb eines jeweils identifizierten Polpaares erfolgt eine genaue Positionsbestimmung über den (elektrischen) Winkel eines durch die Spulen 551 in Fig. 6 und Fig. 8 erzeugten Magnetfeldes. Die Bestimmung dieses Winkels erfolgt vorzugsweise im Fertigungsprozess durch eine beliebige Winkelpositionierung der Spindel 125 mittels des Spulenfeldes innerhalb des Positioniermerkmals 1000.

Fig. 13 zeigt die Leiterplatte 540 von Fig. 5, Fig. 6 und Fig. 12 von ihrer der Magnetscheibe 440 zugewandten Unterseite 541 aus gesehen. Wie oben beschrieben sind bevorzugt zwei Spulen 551 mittels eines Spulenhalters 550 an der Unterseite 541 der Leiterplatte 540 angeordnet. Des Weiteren ist die Lichtschranke 560 illustrativ an der Unterseite 541 der Leiterplatte 540 angeordnet. Darüber hinaus ist ein dem Positioniermerkmal 1000 von Fig. 12 zugeordneter Absolutencoder 1100 beispielhaft an der Unterseite 541 der Leiterplatte 540 angeordnet.

Fig. 14a bis Fig. 14c zeigen einen beispielhaften Kalibriervorgang 1200 des Positioniermerkmals 1000 von Fig. 12 der Magnetscheibe 440 und des der Leiterplatte 540 zugeordneten Absolutencoders 1100 von Fig. 11. Dabei visualisieren Fig. 14a bis Fig. 14c beispielhaft einen Magnetpol 1240 der Magnetscheibe 440, einen am Strahlenumleiter 165 umgeleiteten Laserstrahl 1210, sowie eine Hauptachse 1230, an der der Laserstrahl 1210 orientiert werden soll. Beispielhaft sind fünf Magnetpole 1240 gezeigt.

In Fig. 14a orientiert das Spulenfeld der Spulen 551 von Fig. 13 beispielhaft ein Magnetfeld der Magnetscheibe 440 entlang der Hauptachse 1230, wobei das Positioniermerkmal 1000 und der Strahlenumleiter 165 in einer beliebigen Lage angeordnet sind. Hierbei ist der Laserstrahl 1210 illustrativ um einen Winkel 1220 von der Hauptachse 1230 entfernt. Beispielhaft ist der Laserstrahl 1210 um den Winkel 1220 links von der Hauptachse 1230 angeordnet.

In Fig. 14b wurde das Spulenfeld so lange rotiert, bis der Laserstrahl 1210 illustrativ auf der Hauptachse 1230 liegt. Dies wird vorzugsweise durch eine geeignete, dem Fachmann hinreichend bekannte Detektionsvorrichtung detektiert. Ein dem Spulenfeld zugeordneter erster Winkel wird daraufhin vorzugsweise abgespeichert.

In Fig. 14c wird das Spulenfeld bevorzugt so lange weiter rotiert, bis der Absolutencoder 1100 innerhalb des Positioniermerkmals 1000 liegt. Illustrativ ist der Absolutencoder 1100 mittig innerhalb des Positioniermerkmals 1000 angeordnet. Hierbei ist der Laserstrahl 1210 bevorzugt um einen Winkel 1209 von der Hauptachse 1230 entfernt. Illustrativ ist der Laserstrahl 1210 um den Winkel 1209 rechts von der Hauptachse 1230 angeordnet.

Ein dem Spulenfeld zugeordneter zweiter Winkel wird daraufhin vorzugsweise abgespeichert. Der zweite Winkel definiert dabei bevorzugt die Lage des Positioniermerkmals 1000 innerhalb eines Polpaares bzw. Magnetpols 1240. Die Winkeldifferenz zwischen dem ersten und zweiten Winkel definiert vorzugsweise den Spulenfeldweg vom Positioniermerkmal 1000 zur gesuchten Laserposition.

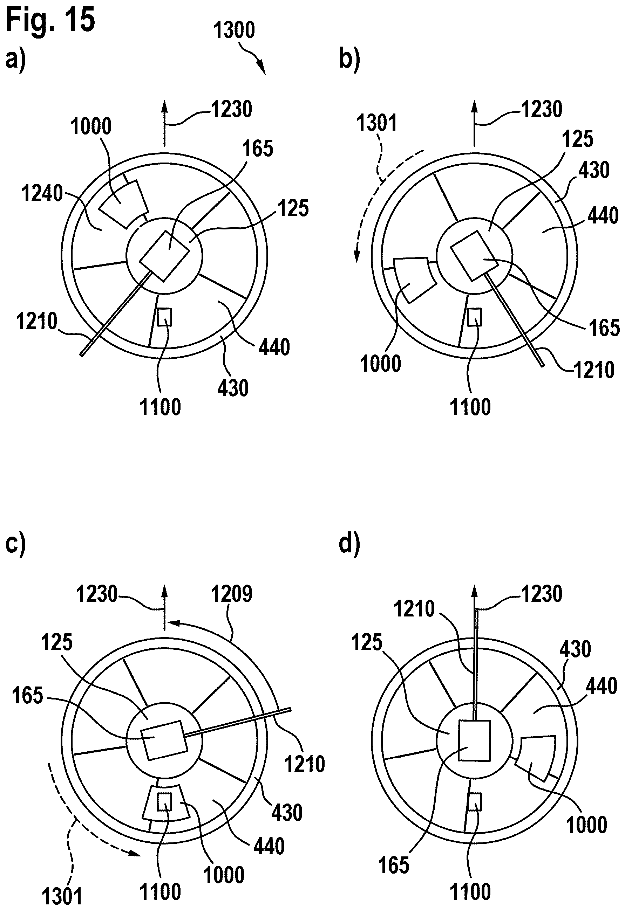

Fig. 15a bis Fig. 15d zeigen einen beispielhaften Absolutpositionierungsvorgang 1300 bei einem Start des Rotationslasers 100 von Fig. 1 ausgehend von dem Kalibriervorgang gemäß Fig. 14a bis Fig. 14c.

In Fig. 15a orientiert das Spulenfeld der Spulen 551 von Fig. 13 beispielhaft das Magnetfeld der Magnetscheibe 440 entlang des zweiten Winkels gem. Fig. 14c. Bevorzugt ist die Absolutlage bis auf einen Winkelabschnitt eines Polpaars genau bestimmt.

In Fig. 15b wird beispielhaft das Spulenfeld in Richtung eines Pfeils 1301 rotiert. Das Spulenfeld wird dabei vorzugsweise so oft um 360°/N, d.h. um ein Polpaar bzw. Magnetpole 1240, rotiert, bis der Absolutencoder 1100 das Positioniermerkmal 1000 detektiert. Insbesondere wird das Spulenfeld dabei bevorzugt bis zu N-1 mal, also einmal weniger als die Anzahl der Polpaare, um ein Polpaar rotiert.

In Fig. 15c befindet sich die Spindel 125 nun beispielhaft in einer Absolutlage W2, bzw. der Position gem. Fig. 14c. Anschließend wird das Spulenfeld bevorzugt um die Winkeldifferenz des ersten und zweiten abgespeicherten Winkels, die gem. Fig. 14a und Fig. 14b ermittelt wurden, rotiert.

In Fig. 15d ist der Laserstrahl 1210 illustrativ entlang der Hauptachse 1230 orientiert. In dieser Position wird vorzugsweise die Lichtschranke 560 von Fig. 13 zurückgesetzt.

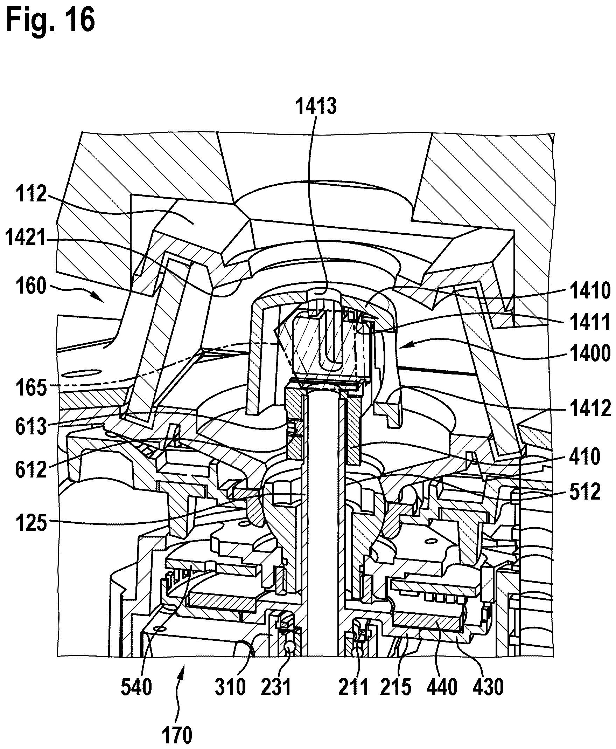

Fig. 16 zeigt das Gehäuse 110 mit dem Rotationskopf 160, bzw. den Strahlenumleiter 165 und die Spindel 125 von Fig. 1 bis Fig. 15. Dabei verdeutlicht Fig. 16 den dem Rotationskopf 160 zugeordneten Käfig 112, der bevorzugt zum Schutz vor einem Anschlagen des Rotationskopfs 160 ausgebildet ist. Der Käfig 112 bildet vorzugsweise einen illustrativ oberen Teil des Gehäuses 110 von Fig. 1 aus. Bevorzugt ist der Käfig 112 der Halterung 410 des Strahlenumleiters 165 zugeordnet. Hierbei bildet der Käfig 112 illustrativ eine Innenaufnahme 1421 zur Aufnahme des Strahlenumleiters 165 aus. Vorzugsweise weist der Käfig 112 Metall und/oder Kunststoff auf.

Beispielhaft ist der Halterung 410 eine Kappe 1400 zugeordnet. Die Kappe 1400 ist vorzugsweise als zusätzliche Schutzmaßnahme zum Schutz vor einem Anschlagen des Strahlenumleiters 165 am Gehäuse 110 bzw. dem Käfig 112 ausgebildet. Hierbei fixiert die Kappe 1400 den Strahlenumleiter 165 illustrativ am Halter 410. Die Kappe 1400 weist beispielhaft einen Grundkörper 1410 mit einer Innenaufnahme 1411 zur Aufnahme der Halterung 410 auf. Bevorzugt ist der Grundkörper 1410 zumindest annähernd zylindrisch ausgebildet. Vorzugsweise weist die Kappe 1400 bzw. der Grundkörper 1410 eine illustrativ obere Ausnehmung 1413 auf. Des Weiteren weist die Kappe 1400 bzw. der Grundkörper 1410 vorzugsweise eine illustrativ rechte Aufnahme 1412 auf. Die Aufnahme 1412 ist bevorzugt zur Aufnahme eines dem Strahlenumleiter 165 zugeordneten Keilprismas (1520 in Fig. 15) zugeordnet.

Bevorzugt ist die Kappe 1400 mittels einer Klemm- oder Rastverbindung an der Halterung 410 befestigt. Vorzugsweise weist die Kappe 1400 Kunststoff auf.

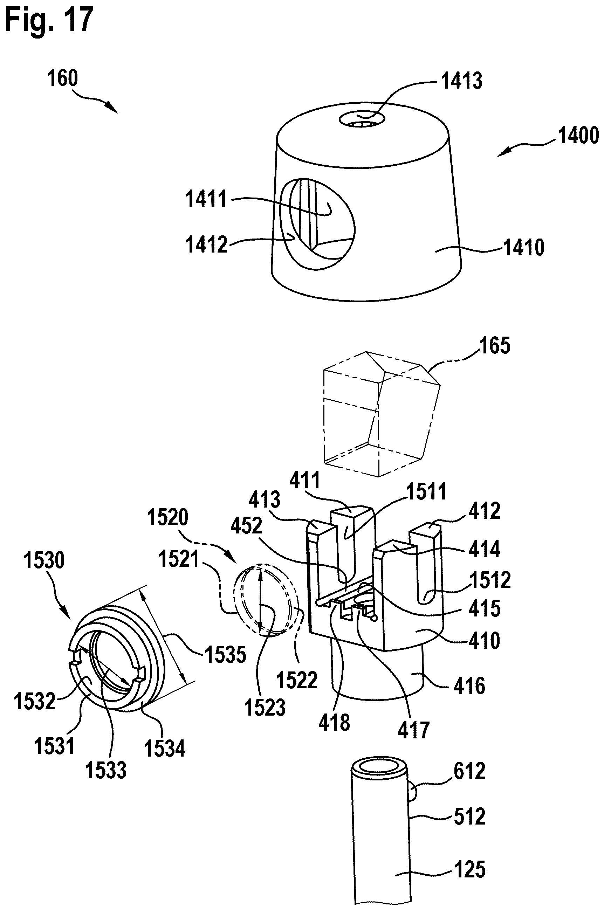

Fig. 17 zeigt den Rotationskopf 160 mit der Spindel 125, der Halterung 410, dem Strahlenumleiter 165 und der Kappe 1400 von Fig. 16. Vorzugsweise ist dem Strahlenumleiter 165 ein Keilprisma 1520 zugeordnet. Das Keilprisma 1520 weist vorzugsweise einen scheibenförmigen Grundkörper 1521 mit einem Außenumfang 1522 und einem Durchmesser 1523 auf.

Bevorzugt ist dem Keilprisma 1520 eine Keilprisma-Halterung 1530 zugeordnet. Die Keilprisma-Halterung 1530 weist beispielhaft einen ringförmigen Grundkörper 1531 mit einer Innenaufnahme 1532, die einen Innendurchmesser 1533 aufweist, auf. Des Weiteren weist der Grundkörper 1531 illustrativ einen Umfangskragen 1534 auf, der den Grundkörper 1531 in radialer Richtung erweitert und einen Außendurchmesser 1535 aufweist. Bevorzugt ist die seitliche Aufnahme 1412 der Kappe 1400 zur Aufnahme des Keilprismas 1520 ausgebildet.

Darüber hinaus verdeutlicht Fig. 17 die der Halterung 410 des Strahlenumleiters 165 zugeordneten Aufnahmeelemente 411, 412, 413, 414. Illustrativ ist zwischen den Aufnahmeelementen 411, 413 eine Ausnehmung 1511 und/oder zwischen den Aufnahmeelementen 412, 414 eine Ausnehmung 1512 ausgebildet. Die illustrativ zwei Ausnehmungen 1511, 1512 sind dabei vorzugsweise jeweils quer, insbesondere senkrecht, zu den zwei Positionierungsflächen 451, 452 angeordnet.

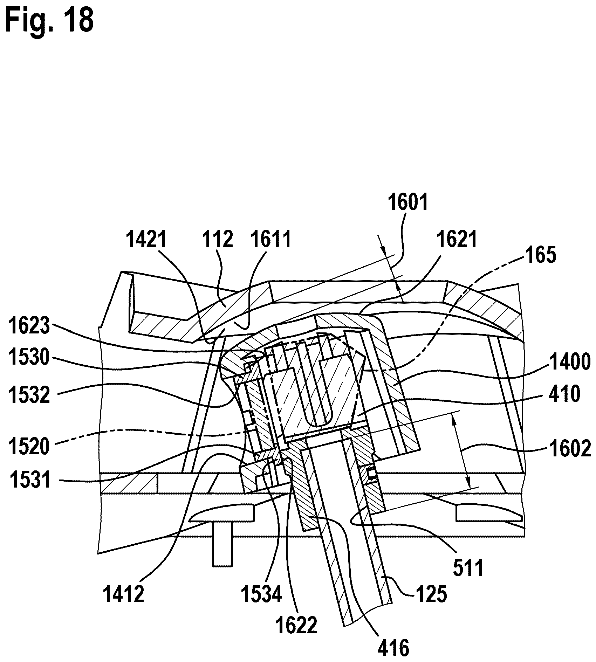

Fig. 18 zeigt den Käfig 112 mit der Innenaufnahme 1421 von Fig. 16, die illustrativ eine dem Strahlenumleiter 165 zugewandte Innenfläche 1611 aufweist, sowie den Strahlenumleiter 165 mit der Kappe 1400 von Fig. 16 und Fig. 17 und die Spindel 125 von Fig. 1 bis Fig. 7, Fig. 9 bis Fig. 12, sowie Fig. 14a bis Fig. 17. Bevorzugt ist die Innenaufnahme 1611 bogenförmig ausgebildet, sodass bei einem Verschwenken des Strahlenumleiters 165 ein Anschlagen an der Innenaufnahme 1611 verhindert werden kann.

Bevorzugt ist ein Abstand 1601 zwischen der Innenfläche 1611 des Käfigs 112 und einer Oberfläche 1621 der der Halterung 410 zugeordneten Kappe 1400 ausgebildet. Des Weiteren weist die Innenaufnahme 511 der Halterung 410 illustrativ eine Tiefe 1602 auf. Der Abstand 1601 ist bevorzugt kleiner als die Tiefe 1602 der Innenaufnahme 511.

Darüber hinaus verdeutlicht Fig. 18 die beispielhafte Anordnung des Keilprismas 1520 mittels der Keilprisma-Halterung 1530 an der Kappe 1400. Vorzugsweise ist die Keilprisma-Halterung 1530 in der Aufnahme 1412 der Kappe 1400 angeordnet. Bevorzugt weitet sich die Aufnahme 1412 über eine Anstehkante 1623 in die Aufnahme 1622 auf. Bevorzugt ist der Umfangskragen 1534 der Keilprisma-Halterung 1530 in der Aufnahme 1622 angeordnet und steht an der Anstehkante 1623 an. Der Grundkörper 1531 der Keilprisma-Halterung 1530 ist illustrativ in der Aufnahme 1412 angeordnet. Das Keilprisma 1520 ist dabei vorzugsweise in der Innenaufnahme 1532 des Grundkörpers 1531 angeordnet.

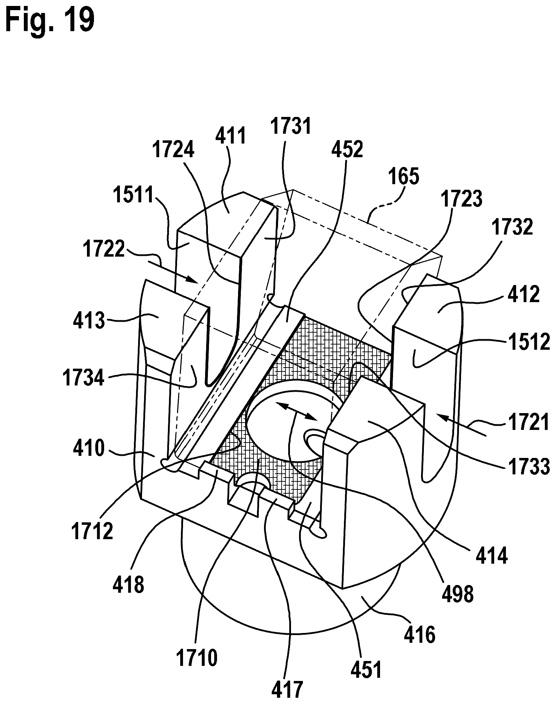

Fig. 19 zeigt die Halterung 410 mit dem Strahlenumleiter 165 von Fig. 17. Bevorzugt ist entlang der Querrichtung 498 der zwei Positionierungsflächen 451, 452 zwischen den zwei Positionierungsflächen 451, 452 eine Klebstoffaufnahme 1712 zur Aufnahme von einem ersten Klebstoff 1710 angeordnet. Bevorzugt weist die Klebstoffaufnahme 1712 eine Aufnahmehöhe entlang der Längserstreckung 201 der Spindel 125 von 0,2 mm auf. Hierdurch kann ein Kapillareffekt erzeugt werden. Der erste Klebstoff 1710 bildet vorzugsweise eine flächige Klebverbindung aus.

Des Weiteren ist in zumindest einer, bevorzugt in beiden Ausnehmungen 1511, 1512, die quer, insbesondere senkrecht, zu den zwei Positionierungsflächen 451, 452 sind und zwischen einem ersten Aufnahmeelement 411, 412 und einem zweiten Aufnahmeelement 413, 415 angeordnet sind, vorzugsweise ein zweiter Klebstoff 1723, 1724 zur Ausbildung einer zweiten Klebverbindung 1721, 1722 angeordnet. Dabei ist die Klebverbindung 1721 in der Ausnehmung 1512 ausgebildet und/oder die Klebverbindung 1722 in der Ausnehmung 1511. Bevorzugt ist die zweite Klebverbindung 1723, 1724 eine Kehlnaht-Klebverbindung.

Darüber hinaus bilden eine dem Strahlenumleiter 165 zugewandte Seite 1731 des Aufnahmeelements 411 und/oder eine dem Strahlenumleiter 165 zugewandte Seite 1734 des Aufnahmeelements 413 beispielhaft eine illustrativ linke Anstehfläche des Strahlenumleiters 165 aus. Bevorzugt bilden eine dem Strahlenumleiter 165 zugewandte Seite 1732 des Aufnahmeelements 412 und/oder eine dem Strahlenumleiter 165 zugewandte Seite 1733 des Aufnahmeelements 414 eine illustrativ rechte Anstehfläche des Strahlenumleiters 165 aus.

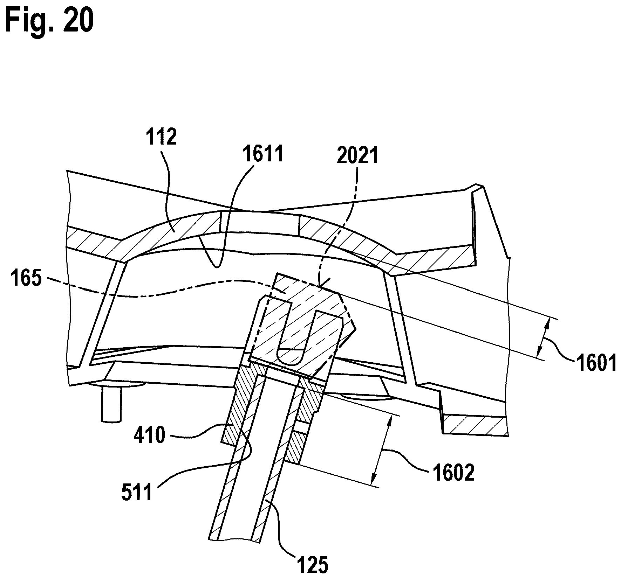

Fig. 20 zeigt den Käfig 112 des Gehäuses 110 von Fig. 1 mit der Spindel 125, die die Halterung 410 und den Strahlenumleiter 165 aufweist. Vorzugsweise ist der Abstand 1601 zwischen der Innenfläche 1611 des Käfigs 112 und einer Oberfläche 2021 des Strahlenumleiters 165 ausgebildet. Der Abstand 1601 ist bevorzugt kleiner als die Tiefe 1602 der Innenaufnahme 511.

Durch die erste und zweite Klebverbindung 1722, 1723, 1724 von Fig. 19 ist der Strahlenumleiter 165 sicher und zuverlässig an der Halterung 410 befestigt. Hierdurch kann wie in Fig. 20 gezeigt auf die Kappe 1400 verzichtet werden.

In dieser Alternativausführung ist das Keilprisma bevorzugt mittels eines optisch transparenten Klebers direkt auf dem Pentaprisma fixiert angeordnet (in Fig. 19 und Fig. 20 der Einfachheit halber nicht dargestellt).

## Patentansprüche

1. Rotationslaser (100) mit einem Gehäuse (110), in dem zur Rotation eines Laserstrahls (1210) eine Antriebseinheit (120) zum rotierenden Antrieb einer Spindel (125) angeordnet ist, wobei an der Spindel (125) ein Strahlenumleiter (165) zum Umlenken des Laserstrahls (1210) angeordnet ist, **dadurch gekennzeichnet, dass** die Spindel (125) eine Halterung (410) aufweist, die zumindest zwei Aufnahmeelemente (411, 412, 413, 414) aufweist, welche eine Aufnahme (415) ausbilden, in der der Strahlenumleiter (165) aufnehmbar ist, wobei die mindestens zwei Aufnahmeelemente (411, 412, 413, 414) dazu ausgebildet sind, den Strahlenumleiter (165) in der Aufnahme (415) mechanisch zu fixieren.

2. Rotationslaser nach Anspruch 1, **dadurch gekennzeichnet, dass** die Aufnahme (415) zwei Positionierungsflächen (451, 452) zum Positionieren des Strahlenumleiters (165) aufweist.

3. Rotationslaser nach Anspruch 1 oder 2, **dadurch gekennzeichnet, dass** der Strahlenumleiter (165) mittels zumindest einer Klebverbindung in der Aufnahme (415) fixiert ist.

4. Rotationslaser nach Anspruch 2 und 3, **dadurch gekennzeichnet, dass** entlang einer Querrichtung (498) der zwei Positionierungsflächen (451, 452) zwischen den zwei Positionierungsflächen (451, 452) eine Klebstoffaufnahme (1712) zur Aufnahme von einem ersten Klebstoff (1710) angeordnet ist, wobei der erste Klebstoff (1710) eine flächige Klebverbindung ausbildet.

5. Rotationslaser nach Anspruch 4, **dadurch gekennzeichnet, dass** in zwei Ausnehmungen (1511, 1512), die quer zu den zwei Positionierungsflächen (451, 452) und zwischen einem ersten Aufnahmeelement (411, 412) und einem zweiten Aufnahmeelement (413, 415) angeordnet sind, ein zweiter Klebstoff (1723, 1724) zur Ausbildung einer zweiten Klebverbindung (1721, 1722) angeordnet ist.

6. Rotationslaser nach Anspruch 5, **dadurch gekennzeichnet, dass** die zweite Klebverbindung (1723, 1724) eine Kehlnaht-Klebverbindung ist.

7. Rotationslaser nach einem der Ansprüche 2 bis 6, **dadurch gekennzeichnet, dass** an zumindest einer Stirnseite (499) der zwei Positionierungsflächen (451, 452) ein Anschlag (417, 418) ausgebildet ist.

8. Rotationslaser nach einem der vorhergehenden Ansprüche, **dadurch gekennzeichnet, dass** die Halterung (410) einen Befestigungsabschnitt (416) zur Anordnung an einem freien Ende der Spindel (125) aufweist.

9. Rotationslaser nach Anspruch 8, **dadurch gekennzeichnet, dass** der Befestigungsabschnitt (416) eine Innenaufnahme (511) mit einer Abflachung (611) aufweist, und wobei die Spindel (125) an ihrem freien Ende (203) eine korrespondierende Aufnahme (512) mit einer Abflachung (621) aufweist.

10. Rotationslaser nach einem der vorhergehenden Ansprüche, **dadurch gekennzeichnet, dass** der Halterung (410) eine Kappe (1400) mit einer Innenaufnahme (1411) zur Aufnahme der Halterung (410) zugeordnet ist.

11. Rotationslaser nach Anspruch 10, **dadurch gekennzeichnet, dass** die Kappe (1400) eine Aufnahme (1412) zur Aufnahme eines Keilprismas (1520) aufweist.

12. Rotationslaser nach einem der vorhergehenden Ansprüche, **dadurch gekennzeichnet, dass** der Halterung (410) ein Käfig (112) zugeordnet ist.

13. Rotationslaser nach Anspruch 12, **dadurch gekennzeichnet, dass** ein Abstand (1601) zwischen einer Innenfläche (1611) des Käfigs (112) zu einer Oberfläche (2021) des Strahlenumleiters (165) kleiner als eine Tiefe (1602) der Innenaufnahme (511) ist.

14. Rotationslaser nach Anspruch 12 oder 13, **dadurch gekennzeichnet, dass** ein Abstand (1601) zwischen einer Innenfläche (1611) des Käfigs (112) zu einer Oberfläche (1621) einer der Halterung (410) zugeordneten Kappe (1400) kleiner als eine Tiefe (1602) der Innenaufnahme (511) ist.
